# EUROPEAN PATENT SPECIFICATION

(11) **EP 1 577 597 B1**
(45) Date of publication and mention of the grant of the patent: **26.12.2012**
(21) Application number: 03775976.8
(22) Date of filing: 28.11.2003
(51) Int. Cl.: B32B 27/34

(54) **RESIN TUBE**
HARZROHR
TUBE DE RESINE

(30) Priority: 25.12.2002 JP 2002374938
(43) Date of publication of application: 21.09.2005
(73) Proprietor: Sanoh Kogyo Kabushiki Kaisha, Koga-shi, Ibaraki-ken 306-0023 (JP)
(72) Inventor: Sato, Masatomi, Koga-shi, Ibaraki 306-0041 (JP)
(74) Representative: HOFFMANN EITLE
(86) International application number: PCT/JP2003/015296
(87) International publication number: WO 2004/059202

(56) References cited:
- EP-A1- 0 888 880
- US-A- 6 062 269

## Description

### TECHNICAL FIELD

The present invention relates to a resin tube to be used as a fuel line on an automobile and, more particularly, to a resin tube having an improved impact resistance.

### BACKGROUND ART

Metal tubes coated with a plated film or a resin film have been generally used as fuel lines on automobiles. The corrosion resistance and chemical resistance of metal tubes have been enhanced through the improvement of coating materials and the construction of coating films.

Recently, resin tubes have been prevalently used as fuel lines as well as metal tubes. Resin tubes have many advantages; resin tubes are rustproof while metal tubes are subject to rusting, are easy to process, increase the degree of freedom of design and are lightweight.

Thermoplastic resins prevalently used for forming resin tubes as fuel lines of this kind include polyamide 11 resin and polyamide 12 resin. Polyamide 11 resin and polyamide 12 resin are excellent in chemical resistance and heat resistance and are suitable materials for forming tubes for fuel lines.

On the other hand, tubes formed of materials containing polyamide 11 resin as a principal component and those containing polyamide 12 resin as a principal component have low flexibility. In some cases, those tubes are difficult to arrange in forming piping. A plasticizer is added to a material for forming resin tubes to make the resin tubes flexible.

In view of safety, resin tubes for fuel lines are required to have high impact resistance such that the resin tubes will not crack when an impulsive force is exerted thereon to prevent fuel leakage.

High-performance laminated tubes have been developed in recent years. Each of those laminated tubes consists of layers of different resins. For example, a laminated tube having an improved fuel permeation inhibiting ability has layers respectively formed of a polyphenylene sulfide resin (PPS resin), an ethylene-vinyl alcohol resin (EvOH resin), a polybutylene naphthalate resin (PBN resin) and a liquid crystallized polymer (LCP). A laminated tube proposed in JP 2002-338173 A by the applicant of the present invention patent application is one of such laminated tubes.

Although the conventional resin tubes formed of a material containing polyamide 11 resin or polyamide 12 resin as a principal component, and a plasticizer have flexibility owing to the effect of the plasticizer, the plasticizer is unable to improve the cold impact resistance of the resin tubes.

When an impact is made on a laminated tube including resin layers having low impact resistance, cracks are developed in the resin layers having low impact resistance and the cracks propagate over the entire laminated tube.

EP-A-1 044 806 relates to multi-layer fuel tubes comprising at least three thermoplastic resin layers. These resin layers comprise a layer of polyamide 11 resin and/or polyamide 12 resin. The layer may for instance be a blend of the polyamide 11 resin and polyamide 12 resin, as the main component, with other polyamide resins or other polymers. The other polymers used in the blend include polypropylene, acrylonitrile-butadiene-styrene (ABS) copolymer resin, polyphenylene oxide, polycarbonate, polyethylene terephthalate, and polybutylene terephthalate. The content of the polyamide 11 resin and/or polyamide 12 resin in the blend is stated as being preferably 40% by weight or more. In the working examples of the EP patent application, tubes are prepared, which comprise a layer of polyamide 12 resin containing a plasticizer and an impact modifier.

### DISCLOSURE OF THE INVENTION

Accordingly, it is an object of the present invention to solve those problems in the prior art and to provide a resin tube having a high impact-resistant ability unparalleled by the conventional resin tubes formed of a material containing polyamide 11 resin or polyamide 12 resin as a principal component.

Another object of the present invention is to provide a laminated tube having a sufficient impact-resistant ability even if the laminated tube includes a resin layer susceptible to impacts.

A laminated resin tube in a first aspect of the present invention includes a tube as defined in claim 1.

A representative polyamide resin as the polyamide 11 resin of the first material (A) is a polyamide resin having acid amide bonds or a copolymerized amide resin containing a polyamide resin having acid amide bonds and can be produced by polymerizing 11-amino undecanoic acid.

The composite polyamide 11 resin as the second material (B) is an elastomer containing olefin as a principal component. Preferable olefin is, for example, ethylene, propylene and butylenes. The olefin elastomer content of the second material (B) is 5 to 10% of 100 parts by weight of the composite polyamide 11 resin. A commercially available composite polyamide 11 resin of the second material (B) is, for example, Rilusan F15XN (Atofina Japan).

Quantities of pellets of the polyamide 11 resin of the first material (A) and those of the composite polyamide resin of the second material (B) corresponding to the contents are mixed by a mixer, and the mixed pellets are plasticized by an extruder. The laminated tube is formed by a coextrusion process.

### BRIEF DESCRIPTION OF THE DRAWINGS

Fig. 1 is a cross-sectional view of a resin tube in a first embodiment according to the present invention;
Fig. 2 is a cross-sectional view of a resin tube in a second embodiment according to the present invention;
Fig. 3 is a cross-sectional view of a resin tube in a third embodiment according to the present invention;
Fig. 4 is a cross-sectional view of a resin tube in a fourth embodiment according to the present invention;
Fig. 5 is a cross-sectional view of a resin tube in a modification of the resin tube in the fourth embodiment; and
Fig. 6 is a table showing results of cold impact tests of examples of the present invention and comparative examples.

### BEST MODE FOR CARRYING OUT THE INVENTION

Resin tubes embodying the present invention will be described with reference to the accompanying drawings.

### First Embodiment

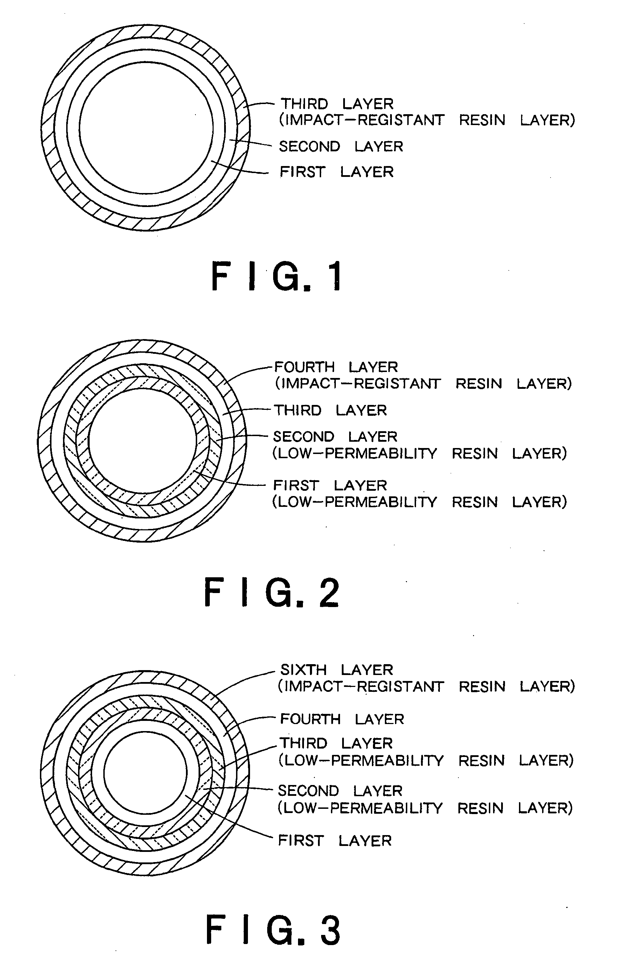

Fig. 1 shows a resin tube in a first embodiment according to the present invention in a cross-sectional view. This resin tube is a three-layer tube having a first layer, namely, the innermost layer to be exposed to fuel, a second layer, namely, an adhesive layer, and a third layer, namely, the outermost layer. The third layer is an impact-resistant resin layer formed of a composite material prepared by mixing per 100 parts by weight of the composite material 65 to 75 parts by weight polyamide 11 resin as a first material (A) and 25 to 35 parts by weight composite polyamide 11 resin as a second material (B) prepared by adding an olefin elastomer to polyamide 11 resin, wherein the olefin elastomer is added in an amount of 5 to 10% by weight with respect to the composite polyamide 11 resin.

The first layer may be formed of a thermoplastic resin suitable for forming a resin tube for a fuel line. To provide a resin tube having a high fuel permeation inhibiting ability, the first layer is formed by a low-permeability resin having a low permeability to fuel, such as one of polyphenylene sulfide resins (PPS resins), polybutylene naphthalate resins (PBN resins), liquid crystallized polymers (LCPs), ethylene-vinyl alcohol resins (EvOH resins), ethylene tetrafluoroethylene resins (ETFE resins) and polyvinylidene fluoride resins (PVDF resins).

### Second Embodiment

Fig. 2 shows a resin tube in a second embodiment according to the present invention in a cross-sectional view. This resin tube is a four-layer tube having a low-permeability first layer, namely, the innermost layer, a low-permeability second layer, a third layer, namely, an adhesive layer, and an impact-resistant fourth layer, namely, the outermost layer.

The first layer is formed of conductive composite resin prepared by mixing carbon fibers in a PPS resin. The second layer is formed of a nonconductive PPS resin not containing carbon fibers. Thus the first and the second layer form a double-wall, conductive, low-permeability structure having high fuel permeation inhibiting ability and capable of discharging static electricity. The PPS resin has satisfactorily low permeability and insufficient impact resistance. The high impact resistance of the impact-resistant fourth layer compensates for the insufficient impact resistance of the PPS resin forming the first and the second layer.

Although the first and the second layer are formed of the same low-permeability resin in the second embodiment, the first and the second layer may be formed of different low-permeability resins, respectively. For example, when the first layer is formed of a LCP having a low permeability to all kinds of fuels and the second layer is formed of an EvOH resin having a low permeability to regular gasoline, the combined effect of the first and the second layer exercise high permeation inhibiting ability regardless of the type of the fuel.

### Third Embodiment

Fig. 3 shows a resin tube in a third embodiment according to the present invention in a cross-sectional view. This resin tube is a five-layer resin tube having a first layer, namely, the innermost layer, formed of an ordinary resin not having particularly low permeability, a low-permeability second layer, a low-permeability third layer, an adhesive fourth layer and an impact-resistant fifth layer, namely, the outermost layer.

### Fourth Embodiment

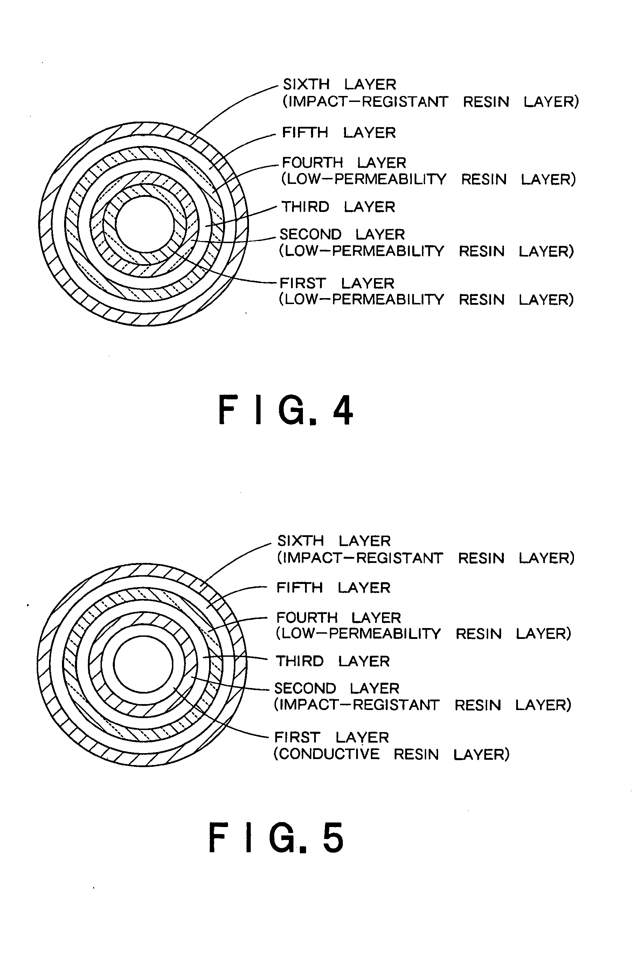

Fig. 4 shows a resin tube in a fourth embodiment according to the present invention in a cross-sectional view. This resin tube is a six-layer resin tube having a low-permeability first layer, a low-permeability second layer, an adhesive third layer, a low-permeability fourth layer, an adhesive fifth layer and an impact-resistant sixth layer. The low-permeability first, second and fourth layers and the adhesive third layer form a three-layer low-permeability structure. The six-layer resin tube has high permeation inhibiting ability and the impact-resistant sixth layer protects the low-permeability layers not sufficiently resistant to impact.

Fig. 5 shows a six-layer resin tube in a modification of the resin tube in the fourth embodiment in a cross-sectional view. This resin tube has a conductive first layer, an impact-resistant second layer, an adhesive third layer, a low-permeability fourth layer, an adhesive fifth layer and an impact-resistant sixth layer, namely, the outermost layer. Thus the low-permeability fourth layer is held between the impact-resistant second and sixth layers, and the impact-resistant second layer protects the conductive first layer. When the fourth layer is formed of a low-permeability resin having poor impact resistance, the construction of this resin tube is effective in preventing the propagation of cracks developed in the fourth layer across the other layers.

Although the laminated resin tubes according to the present invention have been described by way of example, the present invention is applicable to a single-layer resin tube formed on an impact-resistant resin.

### Examples

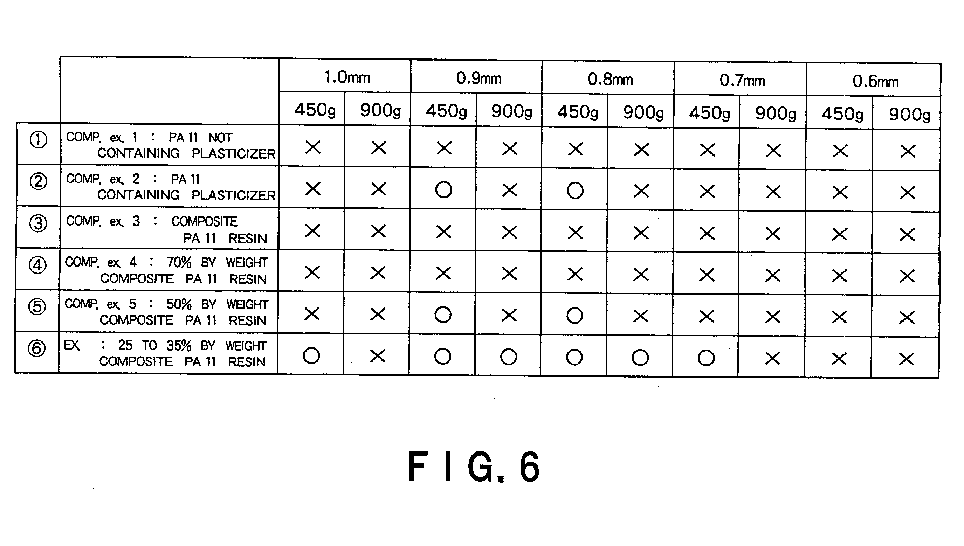

A resin tube in an example of the resin tube in the first embodiment and resin tubes in comparative examples were subjected to cold impact tests. Fig. 6 shows the results of the cold impact tests. The third layers respectively having different thicknesses of the examples and the comparative examples were formed of composite materials prepared by mixing the first material (A) according to the present invention, namely, the polyamide 11 resin, and the second material (B) according to the present invention, namely, the composite polyamide 11 resin prepared by adding a proper amount of an olefin elastomer to polyamide 11 resin in different weight ratios, respectively.

Each of the resin tubes in the example and the comparative example had a first layer of a PPS resin having a thickness of 0.2 mm and an adhesive second layer having a thickness of 0.1 mm.

The outermost layer of the resin tube in Comparative example 1 was formed of polyamide 11 resin containing a plasticizer (BESN BK OTL, Atofina Japan). The outermost layer of the resin tube in Comparative example 2 was formed of polyamide 11 resin containing a plasticizer (BESN BK P20TL, Atofina Japan). The outermost layer of the resin tube in Comparative example 3 was formed of the second material (B), namely, the composite polyamide 11 resin prepared by adding a proper amount of an olefin elastomer to polyamide 11 resin (Rilusan F15XN, Atofina Japan). The outermost layers of the resin tubes in Comparative examples 4 and 5 were formed of composite materials prepared by mixing the second material (B) in the first material (A) in increased weight ratios.

In the cold impact tests, a weight 450 g and a weight of 300 g were dropped from a height of 300 mm onto the test resin tube after keeping the test resin tube in an atmosphere of -40°C for 5 hr. The test resin tubes were examined visually for cracks. In Fig. 6, circles indicate the test resin tubes in which cracks were not developed and crosses indicate the test resin tubes in which some cracks were developed.

As apparent from Fig. 6, the resin tube in Comparative example 1 having the outermost layer formed of the polyamide 11 resin not containing any plasticizer have low impact resistance. It is known from data on the resin tube in Comparative example 3 that the second material (B), namely, the composite polyamide 11 resin, is not an impact-resistant resin.

The resin tube in Example having the outermost layer formed of the composite resin containing the second material (B), namely, the composite polyamide 11 resin, in 25 to 35% by weigh has an exceedingly high impact resistance. The resin tube in Comparative example 5 having the outermost layer formed of the composite material containing the composite polyamide 11 resin in an excessively high weight ratio has a low impact resistance. The resin tube in Comparative example 4 and the resin tube in Comparative example 2 having the outermost layer formed of polyamide 11 resin containing a conventional plasticizer are equivalent in impact resistance.

It is expected that the thinner the impact-resistant layer, the lower is the impact resistance of the impact resistance. The results of impact tests prove this fact. However, it is not necessarily true that an impact-resistant layer having a greater thickness is desirable. A desirable thickness of the impact-resistant layer is in the range of 0.7 to 0.9 mm.

As apparent from the foregoing description, according to the present invention, the resin tube is formed of the materials containing the polyamide 11 resin as a base component has a high impact-resisting ability unparalleled by the conventional resin tubes formed of materials containing polyamide 11 resin or polyamide 12 resin as a principal component.

According to the present invention, the resin tube including the impact-resistant layer and the low-permeability layer having low impact resistance in combination prevents the development of cracks in the low-permeability layer and has a sufficiently high impact resistance.

## Claims

1. A laminated resin tube comprising a plurality of resin layers of thermoplastic resins;
wherein at least one of the plurality of resin layers is an impact-resistant resin layer formed of a composite material obtainable by mixing per 100 parts by weight of the composite material
65 to 75 parts by weight pellets of polyamide 11 resin as a first material (A) and
25 to 35 parts by weight pellets of composite polyamide 11 resin prepared by adding an olefin elastomer to polyamide 11 resin as a second material (B), wherein the olefin elastomer is added in an amount of 5 to 10% by weight with respect to the composite polyamide 11 resin.

2. The resin tube according to claim 1, wherein the outermost resin layer is the impact-resistant layer of a thickness in the range of 0.7 to 0.9 mm.

3. The resin tube according to claim 1, wherein at least either of an intermediate resin layer and the innermost resin layer is a low-permeability resin layer.

4. A resin tube according to claim 3, wherein the innermost resin layer is a first low-permeability resin layer formed of a conductive polyphenylene sulfide resin (PPS resin), a resin layer enclosing the innermost layer is a second low-permeability resin layer formed of a nonconductive polyphenylene sulfide resin (PPS resin), and the outermost layer is the impact-resistant resin layer.

5. A resin tube formed of a composite resin containing 65 to 75% by weight polyamide 11 resin as a first material (A) and 25 to 35% by weight composite polyamide 11 resin prepared by adding 5 to 10% by weight with respect to the composite polyamide 11 resin of an olefin elastomer to polyamide 11 resin as a second material (B).

6. A method of manufacturing a laminated tube having a plurality of resin layers of thermoplastic resins, said method comprising the steps of:
producing 65 to 75 parts by weight pellets of polyamide 11 resin as a first material (A);
producing 25 to 35 parts by weight pellets of composite polyamide 11 resin prepared by adding 5 to 10% by weight with respect to the composite polyamide 11 resin of an olefin elastomer to polyamide 11 resin as a second material (B);
producing 100 parts by weight of a composite resin by mixing the respective pellets of the polyamide 11 resin and the composite polyamide 11 resin; and
forming a laminated resin tube including at least one impact-resistant resin layer of the composite resin.

## Patentansprüche

1. Laminierte Harzröhre, umfassend mehrere Harzschichten aus thermoplastischen Harzen;
wobei mindestens eine der mehreren Harzschichten eine schlagfeste Harzschicht ist, die aus einem Verbundmaterial gebildet ist, welches erhältlich ist durch Mischen auf 100 Gew.-Teile des Verbundmaterials
65 bis 75 Gew.-Teile an Polyamid 11-Harzpellets als erstes Material (A) und
25 bis 35 Gew.-Teile an Verbundpolyamid 11-Harzpellets, die durch Zugabe eines Olefinelastomers zu Polyamid 11-Harz hergestellt werden, als zweites Material (B), wobei das Olefinelastomer in einer Menge von 5 bis 10 Gew.%, bezogen auf das Verbundpolyamid 11-Harz, zugegeben wird.

2. Harzröhre gemäß Anspruch 1, wobei die äußerste Harzschicht die schlagfeste Schicht ist mit einer Dicke im Bereich von 0,7 bis 0,9 mm.

3. Harzröhre gemäß Anspruch 1, wobei mindestens entweder eine intermediäre Harzschicht oder die innerste Harzschicht eine Harzschicht mit geringer Permeabilität ist.

4. Harzröhre gemäß Anspruch 3, wobei die innerste Harzschicht eine erste Harzschicht mit geringer Permeabilität ist, die aus einem leitfähigen Polyphenylensulfidharz (PPS-Harz) gebildet ist, eine Harzschicht, die die innerste Schicht einschließt, eine zweite Harzschicht mit geringer Permeabilität ist, die aus einem nicht-leitfähigen Polyphenylensulfidharz (PPS-Harz) gebildet ist, und die äußerste Schicht die schlagfeste Harzschicht ist.

5. Harzröhre, die aus einem Verbundharz gebildet ist, das 65 bis 75 Gew.% Polyamid 11-Harz als erstes Material (A) und 25 bis 35 Gew.% Verbundpolyamid 11-Harz, das durch Zugabe von 5 bis 10 Gew.% eines Olefinelastomers zu Polyamid 11-Harz, bezogen auf das Verbundpolyamid 11-Harz, hergestellt wird, als zweites Material (B) enthält.

6. Verfahren zur Herstellung einer laminierten Röhre mit mehreren Harzschichten aus thermoplastischen Harzen, wobei das Verfahren die Schritte umfasst:
Herstellen von 65 bis 75 Gew.-Teilen an Polyamid 11-Harzpellets als erstes Material (A);
Herstellen von 25 bis 35 Gew.-Teilen an Verbundpolyamid 11-Harzpellets, die durch Zugabe von 5 bis 10 Gew.% eines Olefinpolymers zu Polyamid 11-Harz, bezogen auf das Verbundpolyamid 11-Harz, hergestellt werden, als zweites Material (B);
Herstellen von 100 Gew.-Teilen eines Verbundharzes durch Mischen der entsprechenden Pellets des Polyamid 11-Harzes und des Verbundpolyamid 11-Harzes; und
Bilden einer laminierten Harzröhre, die mindestens eine schlagfeste Harzschicht aus dem Verbundharz einschließt.

## Revendications

1. Tube de résine stratifiée comprenant une pluralité de couches de résine de résines thermoplastiques ;
dans lequel au moins une de la pluralité de couches de résine est une couche de résine résistant aux impacts formée d'une matière composite pouvant être obtenue par un mélange pour 100 parties en poids de la matière composite
65 à 75 parties en poids de pastilles de résine de polyamide 11 en tant que première matière (A), et
25 à 35 parties en poids de pastilles de résine de polyamide composite 11 préparée en ajoutant un élastomère d'oléfine à une résine de polyamide 11 en tant que seconde matière (B), dans lequel l'élastomère d'oléfine est ajouté en une quantité de 5 à 10 % en poids par rapport à la résine de polyamide composite 11.

2. Tube de résine selon la revendication 1, dans lequel la couche de résine la plus extérieure est la couche résistant aux impacts d'une épaisseur dans la plage de 0,7 à 0,9 mm.

3. Tube de résine selon la revendication 1, dans lequel au moins l'une ou l'autre d'une couche de résine intermédiaire et de la couche de résine la plus intérieure est une couche de résine à faible perméabilité.

4. Tube de résine selon la revendication 3, dans lequel la couche de résine la plus intérieure est une première couche de résine à faible perméabilité formée d'une résine conductrice de sulfure de polyphénylène (résine PPS), une couche de résine englobant la couche la plus intérieure est une seconde couche de résine à faible perméabilité formée d'une résine non conductrice de sulfure de polyphénylène (résine PPS), et la couche la plus extérieure est la couche de résine résistant aux impacts.

5. Tube de résine formé d'une résine composite contenant 65 à 75 % en poids d'une résine de polyamide 11 en tant que première matière (A) et 25 à 35 % en poids de résine de polyamide composite 11 préparée en ajoutant 5 à 10 % en poids par rapport à la résine de polyamide composite 11 d'un élastomère d'oléfine à une résine de polyamide 11 en tant que seconde matière (B).

6. Procédé de fabrication d'un tube stratifié ayant une pluralité de couches de résine de résines thermoplastiques, ledit procédé comprenant les étapes de :
production de 65 à 75 parties en poids de pastilles de résine de polyamide 11 en tant que première matière (A) ;
production de 25 à 35 parties en poids de pastilles de résine de polyamide composite 11 préparée en ajoutant 5 à 10 % en poids par rapport à la résine de polyamide composite 11 d'un élastomère d'oléfine à une résine de polyamide 11 en tant que seconde matière (B) ;
production de 100 parties en poids d'une résine composite en mélangeant les pastilles respectives de la résine de polyamide 11 et de la résine de polyamide composite 11 ; et
la formation d'un tube de résine stratifié incluant au moins une couche de résine résistant aux impacts de la résine composite.
